# EUROPEAN PATENT APPLICATION

(11) **EP 2 339 499 A1**
(43) Date of publication of application: **29.06.2011**
(21) Application number: 09808205.0
(22) Date of filing: 11.08.2009
(51) Int. Cl.: G06F 21/22, G06F 21/24

(54) **STORAGE DEVICE, INFORMATION PROCESSING DEVICE, AND PROGRAM**

(30) Priority: 22.08.2008 JP 2008213597
(71) Applicant: International Business Machines Corporation, Armonk, NY 10504 (US)
(72) Inventor: MUNETOH Seiji, Yamato-shi Kanagawa 242-8502 (JP)
(74) Representative: Stretton, Peter John
(86) International application number: PCT/JP2009/064162
(87) International publication number: WO 2010/021269

(57) **Abstract**

Provided is a storage device including a storage unit readable and writable from outside of the storage device; an integrity information storage unit that stores integrity information used to verify whether data stored in the storage unit is tampered or not, and that is write-protected from the outside of the storage device; a writing unit that receives a write command and a to-be-written data from the outside of the storage device, and writes the to-be-written data onto the storage unit; and a calculation unit that calculates the integrity information of the to-be-written data, and writes the calculated integrity information onto the integrity information storage unit; and a protection unit that inhibits overwriting on the to-be-written data thus written in the storage unit.

## Description

### BACKGROUND OF THE INVENTION

The present invention relates to a storage device, an information processing apparatus and a program for storing data to be verified as to whether the data is tampered or not.

A technology called trusted computing has been known for security measures for a computer or the like (see Trusted Computing Group (TCG) Homepage [searched on 15 July, 2008] on the Internet <https://www.trustedcomputinggroup.org/home/>). In the trusted computing, a hash value of program codes is calculated at a start-up time of a computer, and the calculated hash value is stored in a tamper-resistant security chip called Trusted Platform Module (TPM). With this arrangement, the hash value in the TPM for a program is changed from its original value when the program is tampered. Thus, a verifier is able to detect a tampering of the program by referring to the hash value in the TPM.

In the trusted computing, as described above, the hash value is calculated for a program activated at a boot time of a system. Accordingly, a time required to calculate the hash value is overhead for the booting. This overhead is especially problematic, for example, for an embedded device in a mobile phone or the like, because such device is capable of accessing a storage area only at such a relatively low rate and includes a CPU with such a relatively low computation performance that the overhead increases the start-up time.

### SUMMARY OF THE INVENTION

Against this background, the present invention has an object of providing a storage device, an information processing apparatus, and a program to solve the foregoing problem. This object is achieved by combining the features cited in independent claims in the scope of claims. In addition, the dependent claims define more advantageous specific examples of the present invention.

The present invention provides a storage device comprising: a storage unit readable and writable from outside of the storage device; an integrity information storage unit that stores integrity information used to verify whether data stored in the storage unit is tampered or not, and that is write-protected from the outside of the storage device; a writing unit that receives a write command and a to-be-written data from the outside of the storage device, and writes the to-be-written data onto the storage unit; a calculation unit that calculates the integrity information of the to-be-written data, and writes the calculated integrity information onto the integrity information storage unit; and a protection unit that inhibits overwriting on the to-be-written data thus written in the storage unit. In addition, the present invention also provides an information processing apparatus including the aforementioned storage device, and a program causing an information processing apparatus to function as the storage device. It should be noted that the foregoing outline of the present invention does not include all the features essential to the present invention, and that a sub-combination of these features should be included in the present invention.

### BRIEF DESCRIPTION OF THE DRAWINGS

For a more complete understanding of the present invention and the advantage thereof, reference is now made to the following description taken in conjunction with the accompanying drawings.
Fig. 1 shows a configuration of an information processing apparatus 10 according to an embodiment of the present invention.
Fig. 2 shows one example of a processing flow at the start-up time of the information processing apparatus 10 according to this embodiment of the present invention.
Fig. 3 shows a configuration of a storage device 20 according to this embodiment of the present invention.
Fig. 4 shows transition of the state of a protected area in a storage unit 30.
Fig. 5 shows a processing flow of the storage device 20 at the time of writing a to-be-written program.
Fig. 6 shows a processing flow of the storage device 20 at the time of verification.
Fig. 7 shows a configuration of a security module 18 according to a first modified example of this embodiment of the present invention.
Fig. 8 shows a configuration of an information processing apparatus 10 according to a second modified example of this embodiment of the present invention.
Fig. 9 shows a configuration of an information processing apparatus 10 according to a third modified example of this embodiment of the present invention.
Fig. 10 shows one example of a hardware configuration of a computer 1900 according to this embodiment of the present invention.

### DETAILED DESCRIPTION OF THE PREFERRED EMBODIMENTS

Hereinafter, the present invention will be described based on embodiments of the present invention. The following embodiments, however, does not limit the invention according to the scope of claims. In addition, the entire combination of the features described in the embodiments is not always needed to implement solving means of the present invention.

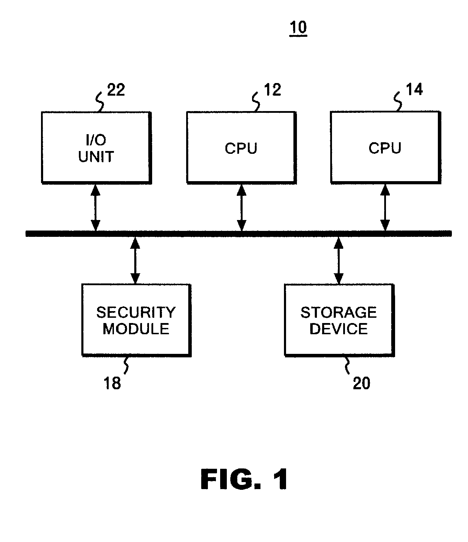

Fig. 1 shows a configuration of an information processing apparatus 10 according to this embodiment. The information processing apparatus 10 includes a CPU 12, a RAM 14, a security module 18, a storage device 20, and an I/O unit. The CPU 12 executes programs to perform computer processing and the like. The RAM 14 stores data and the like used for a program in execution by the CPU 12 and for the operation execution of CPU 12.

The security module 18 stores integrity information that is used to verify whether a program executed by the CPU 12 is tampered or not. In this embodiment, the security module 18 stores an accumulated value of hash values of each program executed by the CPU 12, in a register called a platform configuration register (PCR) to which access from the outside of the storage device 20 is physically limited. Moreover, the security module 18 may include functions of public key cryptography computation, cryptography key generation, hash value calculation, random number generation and the like.

The storage device 20 stores various kinds of data such as code data of one or more programs executed by the CPU 12, audio data and image data. The storage device 20 may be a nonvolatile memory such as a flash memory.

In addition, the storage device 20 stores a boot program executed at the start-up time of the information processing apparatus 10, in an area where writing from the outside of the storage device 20 is inhibited (such area is below called an external-write protected area). Moreover, the storage device 20 stores one or more pieces of the integrity information of the one or more programs stored in the storage device 20, in association with the one or more programs, respectively. In this embodiment, the storage device 20 stores, as the one or more pieces of the integrity information of the one or more programs, hash values corresponding to the respective one or more programs.

To be more specific, when the CPU 12 writes each program to the inside of the storage device 20, the hash value of the program is calculated in parallel with the processing of writing the program. After the completion of the writing of the program, the storage device 20 inhibits overwriting on the already-written program until a predetermined command is given.

Moreover, the storage device 20 stores the hash value of the program in an external-write protected area. The more detailed configuration of the storage device 20 will be described later.

The I/O unit 22 controls input and output of data into and from an apparatus outside the information processing apparatus 10. Incidentally, the boot program may be stored in an external-write protected ROM which is a device different from the storage device 20.

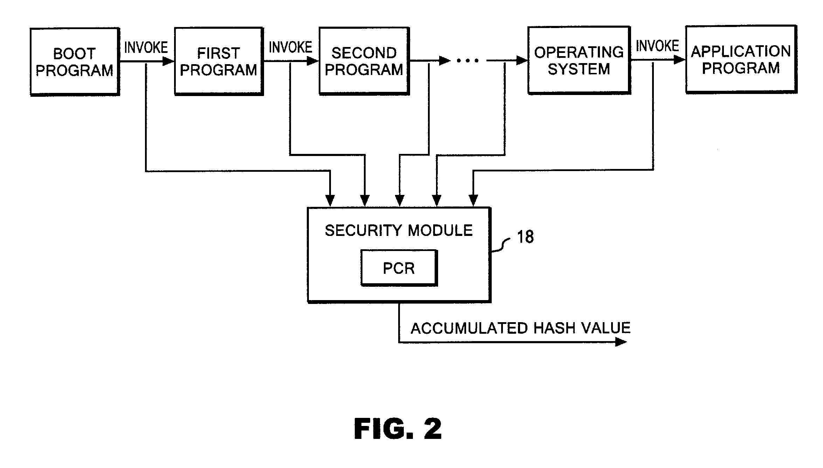

Fig. 2 shows one example of a processing flow at the start-up time of the information processing apparatus 10 according to this embodiment. At the start-up time, the following processing is executed in the information processing apparatus 10.

When powered on, the CPU 12 firstly invokes the boot program from the storage device 20 and executes the boot program. Then, the CPU 12 invokes a first program specified by the boot program in execution, from the storage device 20, and executes the first program. Thereafter, the CPU 12 invokes a second program specified by the first program in execution, from the storage device 20, and executes the second program. After that, the CPU 12 repeatedly invokes another program specified by a program in execution and executes the newly-invoked program. Moreover, the CPU 12 invokes an operating system (or an application program to be activated on the operating system) from the storage device 20 and executes the operating system.

Moreover, at the start-up time, prior to the execution of each of the programs stored in the storage device 20, the CPU 12 reads the hash value of the program from the storage device 20 and gives the read hash value to the security module 18. Whenever being given the hash value by the CPU 12, the security module 18 updates the value in the PCR according to the given hash value. More specifically, the security module 18 executes processing of adding up the given hash value and the value read from the PCR, of performing hash computation on the added-up value, and of overwriting the value in the PCR with the resultant added-up value. Here, the initial value in the PCR immediately after the power-on is set to a predetermined value (for example, all the bits are set to 0 or 1). As a result of this processing, the value written on the PCR at the stage of executing the operating system (or application program) is an accumulated value of the hash values of respective programs activated before the execution of the operating system (or application program).

As for the boot program firstly executed at the start-up time, the hash value is inhibited from being read from the storage device 20 and stored in the security module 18 in advance. This allows the storage device 20 to inhibit physical writing from the outside of the storage device 20 onto the area where the boot program is stored, thereby preventing tampering of the boot program.

The accumulated hash value stored in the PCR always takes a predetermined value if all the programs executed in stepwise at the start-up time are in good conditions without being tampered. In contrast, if any of the programs is tampered, the corresponding hash value in the storage device 20 is changed during the tampering of the program. Consequently, in the aforementioned start-up method, the hash value stored in the PCR becomes different from the previously expected value. Thus, the information processing apparatus 10 described above lets a verifier detect whether a program in execution is tampered or not, for example, by transmitting the accumulated hash value, stored in the PCR, to the verifier with a signature or the like attached to the hash value.

Further, when writing a program onto the storage device 20, the information processing apparatus 10 described above calculates the hash value of the program and writes the hash value onto an external write protected area in the storage device 20. At the start-up time, prior to the execution of each of the programs, the information processing apparatus 10 reads the hash value of the program from the storage device 20, and gives the hash value to the security module 18. Thus, the information processing apparatus 10 does not need to execute the computation for calculating the hash value of each of the programs at the start-up time, so that the information processing apparatus 10 can reduce the start-up time period without having the overhead for calculating the hash value.

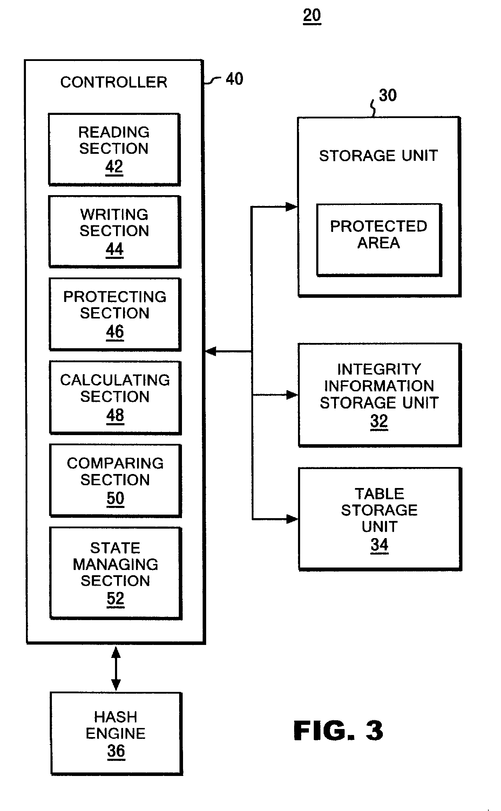

Fig. 3 shows a configuration of the storage device 20 according to this embodiment. The storage device 20 includes a storage unit 30, an integrity information storage unit 32, a table storage unit 34, a hash engine 36 and a controller 40.

The storage unit 30 is readable and writable from the outside of the storage device 20, and stores various kinds of data. The storage unit 30 includes a protected area. This protected area is used to store one or more to-be-written programs for which a tempering detection is performed, and is settable to be in an overwrite-protected state.

The integrity information storage unit 32 stores the hash value of each of the one or more to-be-written programs stored in the protected area in the storage unit 30, in association with the to-be-written program. The integrity information storage unit 32 is write-protected from the outside of the storage device 20.

The table storage unit 34 stores a management table. The management table stores area information specifying the protected area in the storage unit 30. Moreover, the management table stores: write failure information indicating whether a write operation for each of the to-be-written programs onto the storage unit 30 is failed or not; and state information indicating the state of the protected area in the storage unit 30. The table storage unit 34 may be configured to be write-protected from the outside of the storage device 20.

Incidentally, the storage unit 30, the integrity information storage unit 32 and the table storage unit 34 may be provided respectively in different areas in a single nonvolatile device. Alternatively, the storage unit 30, the integrity information storage unit 32 and the table storage unit 34 may be provided respectively in different nonvolatile devices.

The hash engine 36 is given a to-be-written program by the controller 40 at the time of writing the to-be-written program onto the storage unit 30. Then, the hash engine 36 calculates the hash value of the given to-be-written program, and returns the calculated hash value to the controller 40. For example, the hash engine 36 may be a hardware device different from a hardware device constituting the controller 40, or may be a functional block implemented by the controller 40.

The controller 40 controls the whole of the storage device 20. The controller 40 includes, as functional blocks, a reading section 42, a writing section 44, a protecting section 46, a calculating section 48, a comparing section 50, and a state managing section 52.

Upon receipt of read commands from the outside of the storage device 20, the reading section 42 reads various kinds of data (such as programs, audio data, and image data) stored in the storage unit 30, and outputs the read data to the outside. In addition, before the CPU 12 invokes a to-be-written program from the protected area in the storage unit 30, the reading section 42 reads the hash value corresponding to the to-be-written program from the integrity information storage unit 32, and transmits the read hash value to the CPU 12. Thus, the CPU 12 is able to give the hash value of the to-be-written program to the security module 18 prior to the execution of the to-be-written program.

The writing section 44 receives a write command and the various kinds of data from the outside of the storage device 20, and writes the various kinds of data onto the storage unit 30. At this time, when being given a write command and a to-be-written program, the writing section 44 writes the to-be-written program onto the protected area in the storage unit 30.

On condition that the writing section 44 successfully completes the writing of the to-be-written program onto the protected area in the storage unit 30, the protecting section 46 inhibits overwriting on the to-be-written program already written on the storage unit 30. In contrast, on condition that the writing section 44 fails to write the to-be-written program onto the protected area in the storage unit 30, the protecting section 46 allows writing from the outside of the storage device 20 onto the area where the to-be-written program should have been written in the storage unit 30.

Moreover, on condition that a setup command to cancel the overwrite-protected state is given from the outside of the storage device 20, the protecting section 46 may allow overwriting on the to-be-written program already written on the storage unit 30.

When being given a to-be-written program, the calculating section 48 calculates the hash value of the to-be-written program by use of the hash engine 36. Then, the calculating section 48 writes the calculated hash value onto the integrity information storage unit 32 in association with the to-be-written program written in the storage unit 30. Moreover, upon receipt of a verification command from the outside in a state where overwriting on the to-be-written program written in the storage unit 30 is inhibited, the calculating section 48 reads the to-be-written program stored in the storage unit 30 and then newly calculates the hash value of the read to-be-written program by use of the hash engine 36.

The comparing section 50 makes a comparison to determine whether or not the hash value stored in the integrity information storage unit 32 matches the hash value newly calculated in response to a receipt of the verification command. In addition, the comparing section 50 may receive an expected value of the hash value of the to-be-written program that is given from the outside together with the write command, and may make a comparison to determine whether or not the hash value calculated by the calculating section 48 matches the expected value.

The state managing section 52 manages the state of the protected area in the storage unit 30, by referring to the state information stored in the management table stored in the table storage unit 34.

When the CPU 12 writes a to-be-written program onto the storage unit 30, the storage device 20 described above calculates the hash value of the to-be-written program, and causes the integrity information storage unit 32 to store the calculated hash value therein. Then, when the CPU 12 reads a to-be-written program, the storage device 20 reads the hash value of the to-be-written program stored in the integrity information storage unit 32. In this way, the information processing apparatus 10 is able to output the hash value of each program at the start-up time, and consequently reduces the start-up time period by eliminating the overhead for calculating the hash value to be stored in the security module 18.

Instead of storing the integrity information of the to-be-written programs, the storage device 20 may store the integrity information of to-be-written data (for example, music data, image data and the like) other than the programs stored in the storage device 20, while associating each kind of the to-be-written data with its corresponding protected area. In this case, at the time of writing to-be-written data, the storage device 20 calculates the integrity information and causes the integrity information storage unit 32 to store the integrity information therein. Additionally, the storage device 20 can be used to protect the integrity of data of any format, such as an image of an entire file system.

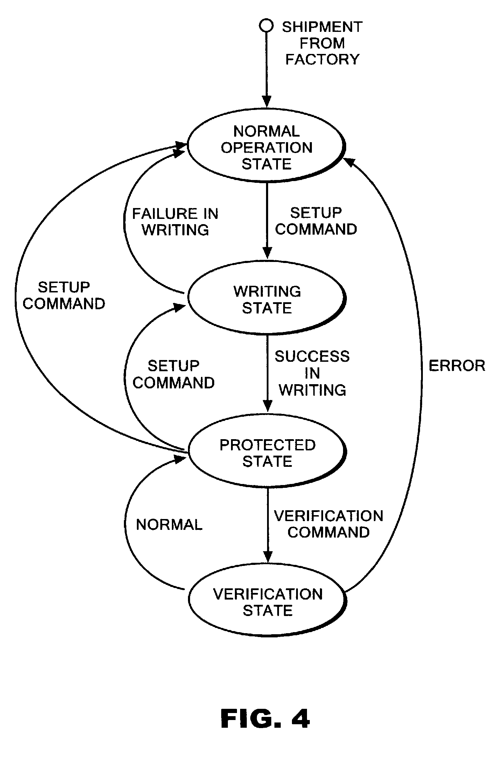

Fig. 4 shows transition of the state of the protected area in the storage unit 30. The state managing section 52 manages the protected area in the storage unit 30 so that the protected area will be set in any one of a normal operation state, a writing state, a protected state and a verification state.

The normal operation state indicates a state where the protected area in the storage unit 30 is allowed to be written from the outside of the storage device 20. When being given a write command in the normal operation state, the protecting section 46 can write the data given together with the write command onto the protected area in the storage unit 30.

The protected state indicates a state where the protected area in the storage unit 30 is write-protected from the outside of the storage device 20. When being given a write command in the protected state, the protecting section 46 inhibits the given data from being written onto the protected area in the storage unit 30.

The writing state indicates a state where a to-be-written program given from the outside of the storage device 20 is currently being written onto the protected area in the storage unit 30. The verification state indicates a state where the to-be-written program written on the protected area in the storage unit 30 is currently being verified.

The state managing section 52 makes the transition of the state of the protected area in the storage unit 30 as follows. Initially, at the time of shipment from a factory, the state managing section 52 sets the protected area in the storage unit 30 in the normal operation state.

Upon receipt of a setup command in the normal operation state or the protected state, the state managing section 52 causes the protected area in the storage unit 30 to transition into the writing state. When being given a write command in the writing state, the state managing section 52 writes a to-be-written program given together with the write command, onto the protected area in the storage unit 30. In addition, when being given another setup command in the protected state, the state managing section 52 may cause the protected area in the storage unit 30 to transition into the normal operation state.

When the to-be-written program is successfully written in the writing state, the state managing section 52 causes the protected area in the storage unit 30 to transition into the protected state. In contrast, when the to-be-written program fails to be written in the writing state, the state managing section 52 causes the protected area in the storage unit 30 to transition into the normal operation state.

Moreover, upon receipt of a verification command in the protected state, the state managing section 52 causes the protected area in the storage unit 30 to transition into the verification state. When the verification produces a normal result, the state managing section 52 causes the protected area in the storage unit 30 to transition into the protected state. Instead, when the verification produces an error result, the state managing section 52 causes the protected area in the storage unit 30 to transition into the normal operation state.

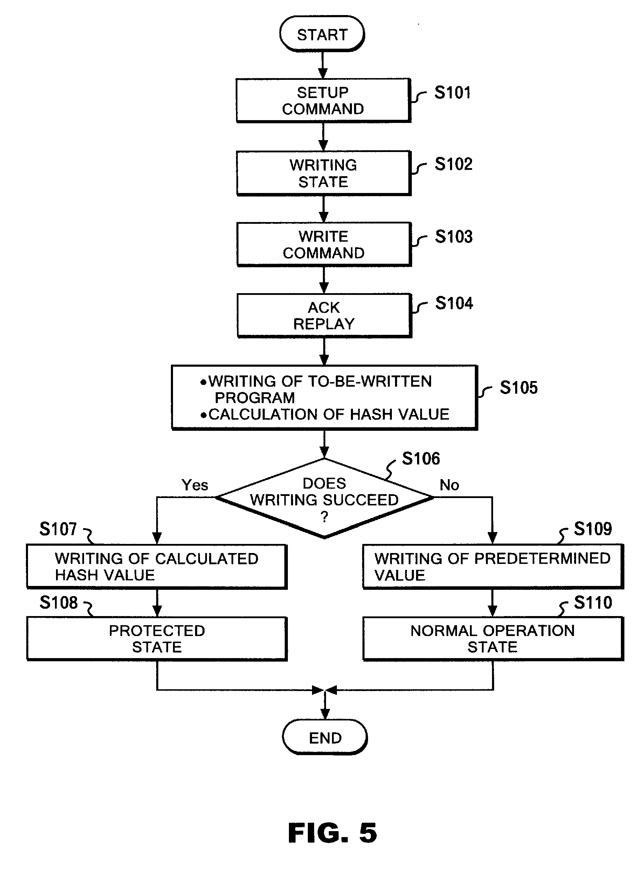

Fig. 5 shows a processing flow of the storage device 20 at the time of writing a to-be-written program. In the normal operation state or the protected state, the storage device 20 can receive a setup command from the outside of the storage device 20 (slot). The setup command may include information specifying the location of the protected area.

Upon receipt of the setup command, the writing section 44 overwrites the state information stored in the management table to replace a value indicating the normal operation state or the protected state, with a value indicating the writing state. With this overwriting, the state managing section 52 is allowed to cause the protected area in the storage unit 30 to transition into the writing state (S102).

Subsequently, the writing section 44 receives a write command and a to-be-written program from the outside of the storage device 20 (S103). Thereafter, the writing section 44 checks the coherence of the write command such as whether or not a write area indicated in the write command specifies a place within the protected area, and then returns an acknowledgement (ACK) to the sender of the write command (S104).

Next, the writing section 44 writes the received to-be-written program onto the protected area in the storage unit 30 (S105). Moreover, in parallel with the writing operation of the to-be-written program by the writing section 44, the calculating section 48 calculates the hash value of the to-be-written program (S105).

Then, the calculating section 48 determines whether or not the writing section 44 successfully completes the writing of the to-be-written program (S106). For instance, the calculating section 48 may determine that the writing is successfully completed, when the writing section 44 completes writing of the entire to-be-written program from the beginning to the end onto the protected area in the storage unit 30.

On condition that the writing is successfully completed (Yes in S106), the calculating section 48 writes the calculated hash value onto the integrity information storage unit 32 in association with the to-be-written program (S107). Thereafter, the writing section 44 overwrites the state information stored in the management table to replace the value indicating the writing state with the value indicating the protected state. Hence, the state managing section 52 causes the protected area in the storage unit 30 to transition into the protected state (S108).

On the other hand, on condition that the writing is failed (No in S106), the calculating section 48 writes a predetermined value (for instance, a value including 0 or 1 for all the bits) onto the integrity information storage unit 32, instead of writing the hash value to be written in association with the to-be-written program (S109). Then, the writing section 44 may overwrite the write failure information stored in the management table with a value indicating the failure of the writing. In addition, the writing section 44 overwrites the state information stored in the management table to replace the value indicating the writing state with the value indicating the normal operation state. This overwriting allows the state managing section 52 to cause the protected area in the storage unit 30 to transition into the normal operation state (S110).

As a result of the foregoing processing, the protecting section 46 inhibits overwriting onto the to-be-written program already written in the storage unit 30, on condition that the writing section 44 successfully completes the writing of the to-be-written program onto the protected area in the storage unit 30. On the other hand, on condition that the writing section 44 fails to write the to-be-written program onto the protected area in the storage unit 30, the protecting section 46 allows writing from the outside of the storage device 20 onto an area where the to-be-written program should have been written in the storage unit 30.

In step S103, the comparing section 50 may receive an expected value of the hash value of the to-be-written program, together with the write command and the to-be-written program. In this case, in step S106, the comparing section 50 makes a comparison to determine whether the hash value calculated by the calculating section 48 in step S105 matches the received expected value. Then, the calculating section 48 may determine that the writing is succeeded if the comparing section 50 obtains a comparison result indicating the matching of the values, and may determine that the writing is failed if the comparing section 50 obtains a comparison result indicating the mismatching of the values, for example.

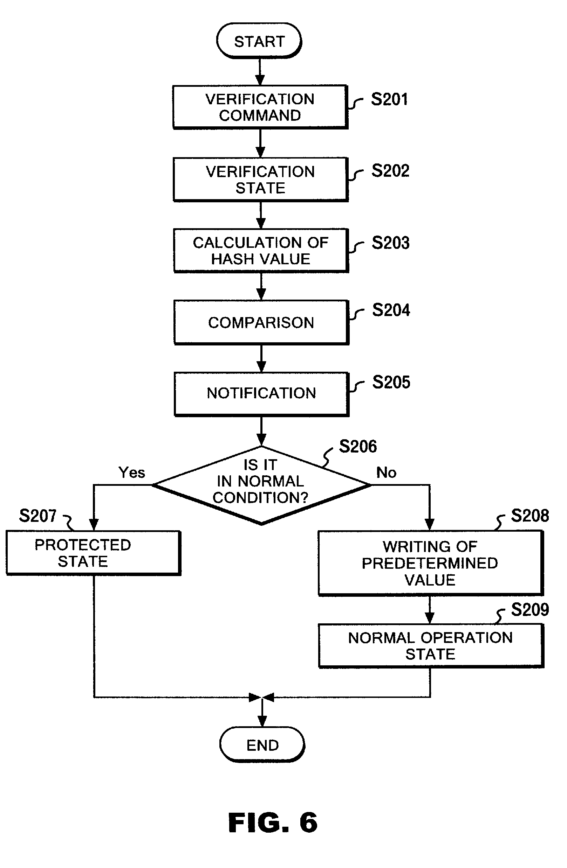

Fig. 6 shows a processing flow of the storage device 20 at the time of verification. In the protected state, the storage device 20 can receive a verification command from the outside of the storage device 20 (S201). The verification command may include information specifying a to-be-written program to be verified.

Upon receipt of the verification command, the writing section 44 overwrites the state information stored in the management table to replace a value indicating the protected state with a value indicating the verification state. With this overwriting, the state managing section 52 is allowed to cause the protected area in the storage unit 30 to transition into the verification state (S202).

Subsequently, the calculating section 48 reads out the to-be-written program specified by the verification command, from the protected area in the storage unit 30, and then calculates the hash value of the to-be-written program (S203). Upon completion of the calculation of the hash value, the comparing section 50 makes a comparison to determine whether the hash value of the to-be-written program stored in the integrity information storage unit 32 matches the hash value newly calculated in response to the receipt of the verification command (S204). Then, the comparing section 50 makes a notification of the comparison result to the sender of the verification command (S205).

Next, the protecting section 46 determines whether the to-be-written program stored in the protected area in the storage unit 30 is in normal condition or not (is in error condition) (S206) . More specifically, the protecting section 46 determines that the to-be-written program is in normal condition if the comparing section 50 obtains the comparison result indicating the matching of the values, and determines that the to-be-written program is in error condition if the comparing section 50 obtains a comparison result indicating the mismatching of the values.

If the to-be-written program is in normal condition (YES in S206), the protecting section 46 overwrites the state information stored in the management table to replace the value indicating the verification state with the value indicating the protected state. With this overwriting, the state managing section 52 is allowed to cause the protected area in the storage unit 30 to transition into the protected state (S207).

Meanwhile, if the to-be-written program is in error condition (No in S206), the protecting section 46 writes a predetermined value (for instance, a value including 0 or 1 for all the bits) onto the integrity information storage unit 32, instead of the hash value written in association with the to-be-written program (S208). After that, the protecting section 46 overwrites the state information stored in the management table to replace the value indicating the verification state with the value indicating the normal operation state. With this overwriting, the state managing section 52 is allowed to cause the protected area in the storage unit 30 to transition into the normal operation state (S209). Then, the protecting section 46 allows overwriting onto the to-be-written program in the storage unit 30.

Through the foregoing processing, the storage device 20 can detect whether a to-be-written program stored in the storage unit 30 is tampered or not. The storage device 20 may be configured to verify each of the to-be-written programs stored in the storage unit 30 on a regular basis by periodically receiving the verification commands from the CPU 12, for example.

Instead of writing the hash value written in association with the to-be-written program in the foregoing processing in step S208, the protecting section 46 may write the hash value newly calculated in response to the receipt of the verification command, onto the integrity information storage unit 32. In this case, in the processing of step S209, the protecting section 46 may overwrite the state information stored in the management table to replace the value indicating the verification state with the value indicating the protected state. Thus, even when the to-be-written program already recoded in the storage unit 30 is tampered due to any possible factor, the verifier will be able to detect the tampering because the storage device 20 causes the integrity information storage unit 32 to store a value different from the hash value of the to-be-written program in normal condition.

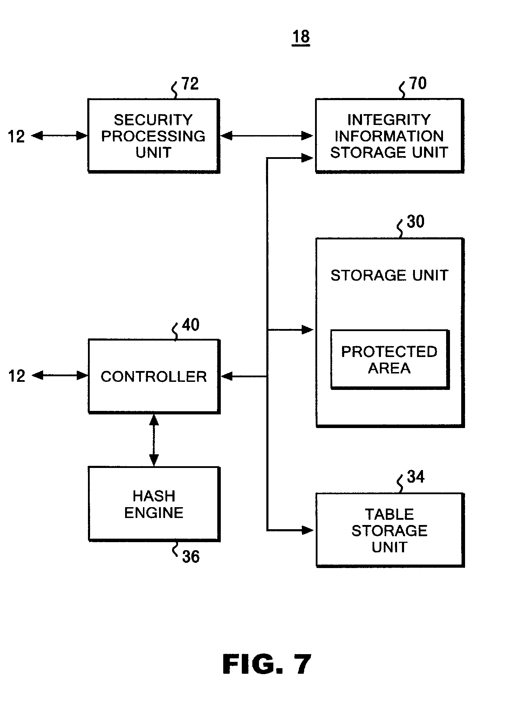

Fig. 7 shows a configuration of a security module 18 according to a first modified example of this embodiment. The security module 18 according to this modified example includes a storage unit 30, a table storage unit 34, a hash engine 36, a controller 40, an integrity information storage unit 70 and a security processing unit 72. The storage unit 30, the table storage unit 34, the hash engine 36, and the controller 40 each employ almost the same configuration and function as those indicated by the same reference numerals in Fig. 3. Thus, the explanation of these components is omitted herein.

The integrity information storage unit 70 is a nonvolatile storage unit, and has a function in which the function of the PCR in the security module 18 shown in Fig. 1 is combined with the function of the integrity information storage unit 32 in the storage device 20 shown in Fig. 3. The security processing unit 72 has functions other than the function of the PCR in the security module 18. For example, the security processing unit 72 has functions of computation for RSA cryptography, cryptography key generation, hash value calculation, random number generation and the like. Incidentally, the function of calculating the hash value in the security processing unit 72, and the hash engine 36 can be implemented by a common functional block.

The information processing apparatus 10 including the security module 18 according to the first modified example is able to reduce the start-up time period by eliminating the overhead for calculating the hash value of each of the programs, as in the case with the information processing apparatus 10 described with reference to Figs. 1 to 6. In addition, the security module 18 according to the first modified example is able to hold the hash value of each of the programs with higher tamper-resistance.

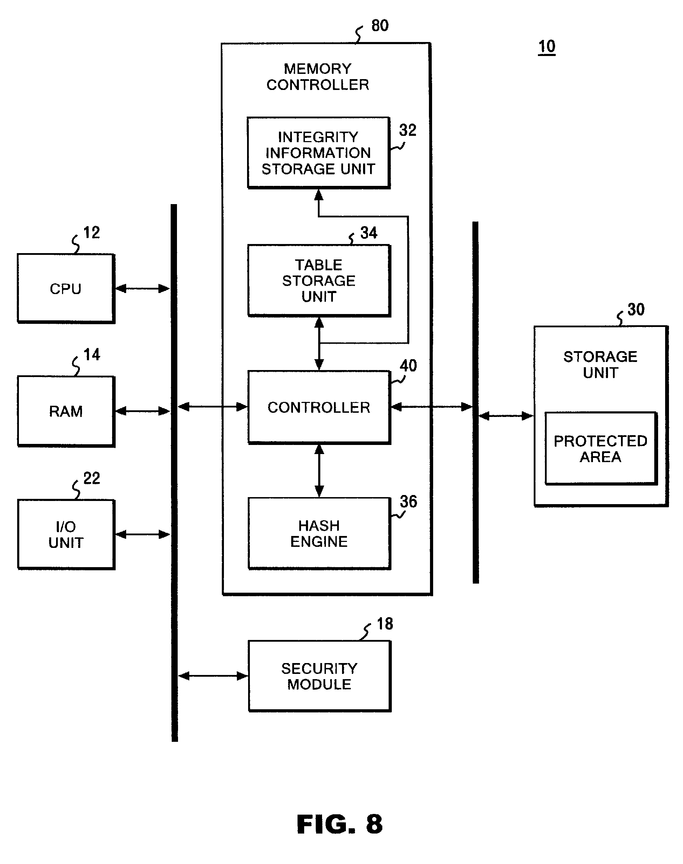

Fig. 8 shows a configuration of an information processing apparatus 10 according to a second modified example of this embodiment. The information processing apparatus 10 according to this modified example employs almost the same configuration and functions as those of the information processing apparatus 10 shown in Fig. 1. For this reason, in Fig. 8, the same reference numerals as those shown in Fig. 1 are given to almost the same components and functional units as those in Fig. 1. In addition, description will be below provided for only different points from the information processing apparatus 10 shown in Fig. 1 while omitting the same points.

The information processing apparatus 10 according to this modified example includes a storage unit 30 and a memory controller 80 instead of the storage device 20. Since the storage unit 30 has almost the same configuration and function as those in the storage unit 30 shown in Fig. 3, the explanation thereof is omitted herein.

The memory controller 80 accepts an access to the storage unit 30 from a CPU 12, and performs data reading, data writing and various kinds of controls on the storage unit 30 in response to the access. Moreover, the memory controller 80 according to this modified example includes an integrity information storage unit 32, a table storage unit 34, a hash engine 36 and a controller 40. Since the integrity information storage unit 32, the table storage unit 34, the hash engine 36 and the controller 40 each have almost the same configuration and function as the components with the same reference numerals shown in Fig. 3, the explanation thereof is omitted herein.

The information processing apparatus 10 according to the second modified example is able to reduce the start-up time period by eliminating the overhead for calculating the hash value of each of the programs, as in the case with the information processing apparatus 10 described with reference to Figs. 1 to 6. Moreover, in the information processing apparatus 10 according to the second modified example, the memory controller 80 internally has the functions of calculating and holding the hash value. Accordingly, a general-purpose nonvolatile memory can be used as the storage unit 30.

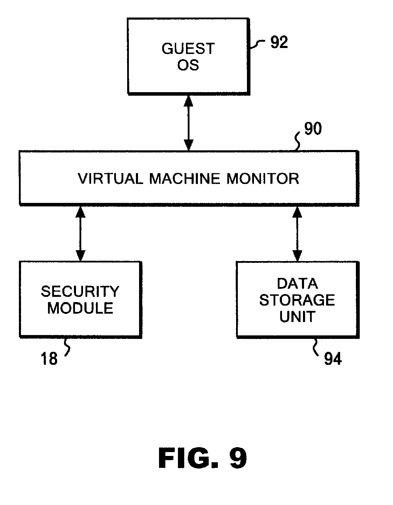

Fig. 9 shows a configuration of an information processing apparatus 10 according to a third modified example of this embodiment. The information processing apparatus 10 according to this modified example includes a virtual machine monitor 90, a guest OS 92, a data storage unit 94, a security module 18 and a storage device 20.

The virtual machine monitor 90 virtualizes hardware resources of a computer by use of software. The virtual machine monitor 90 is a function implemented by the information processing apparatus 10 when the information processing apparatus 10 executes a virtualization program. The guest OS 92 is an operating system running on the hardware resources virtualized by the virtual machine monitor 90. The data storage unit 94 is, for example, a hard disk drive or the like, and stores data.

In the information processing apparatus 10 according to the third modified example, the virtual machine monitor 90 virtualizes a configuration and functions that are the same as those of the storage device 20 shown in Fig. 1, and provides the virtualized configuration and functions to the guest OS 92. Thus, in the information processing apparatus 10 according to this modified example, programs are invoked from a storage device 20 virtualized by the virtual machine monitor 90, and then are executed. Accordingly, the information processing apparatus 10 according to this modified example is able to reduce the start-up time period for a virtualized computer by eliminating the overhead for calculating the hash value of each of programs at the start-up time.

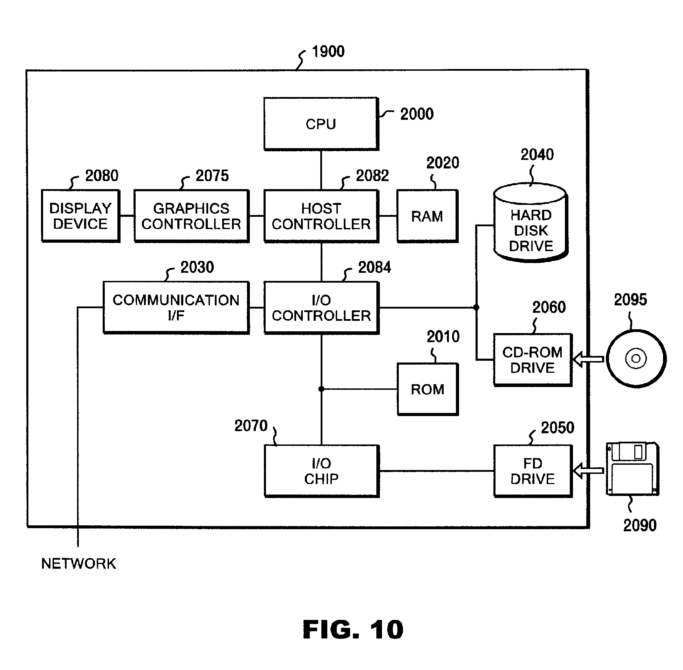

Fig. 10 shows one example of a hardware configuration of a computer 1900 according to this embodiment. The computer 1900 according to this embodiment includes a CPU peripheral unit, an input/output unit and a legacy input/output unit. The CPU peripheral unit includes a CPU 2000, a RAM 2020, a graphics controller 2075 and a display device 2080, all of which are mutually connected to one another via a host controller 2082. The input/output unit includes a communication interface 2030, a hard disk drive 2040 and a CD-ROM drive 2060, all of which are connected to the host controller 2082 via an input/output controller 2084. The legacy input/output unit includes a ROM 2010, a flexible disk drive 2050 and an input/output chip 2070, all of which are connected to the input/output controller 2084.

The host controller 2082 connects the RAM 2020 to the CPU 2000 and the graphics controller 2075, each of which accesses the RAM 2020 at a high transfer rate. The CPU 2000 operates in accordance with programs stored in the ROM 2010 and in the RAM 2020, and controls each of the components in the computer 1900. The graphics controller 2075 obtains image data that the CPU 2000 or the like generates in a frame buffer provided in the RAM 2020, and displays the obtained image data on a display device 2080. Instead of this, the graphics controller 2075 may internally include a frame buffer in which the image data generated by the CPU 2000 or the like is stored.

The input/output controller 2084 connects the host controller 2082 to the communication interface 2030, the hard disk drive 2040 and the CD-ROM drive 2060, all of which are relatively high-speed input/output devices. The communication interface 2030 communicates with an external device via a network. The hard disk drive 2040 stores programs and data used by the CPU 2000 in the computer 1900. The CD-ROM drive 2060 reads a program or data from a CD-ROM 2095, and provides the read-out program or data to the hard disk drive 2040 through the RAM 2020.

Moreover, the input/output controller 2084 is connected to relatively low-speed input/output devices such as the ROM 2010, the flexible disk drive 2050 and the input/output chip 2070. The ROM 2010 stores programs such as a boot program executed by the computer 1900 at its start-up time and a program dependent on the hardware of the computer 1900. The flexible disk drive 2050 reads a program or data from a flexible disk 2090, and provides the read program or data to the hard disk drive 2040 through the RAM 2020. The input/output chip 2070 connects the flexible disk drive 2050 to the input/output controller 2084, and also connects various kinds of input/output devices to the input/output controller 2084 through, for example, a parallel port, a serial port, a keyboard port, a mouse port and the like.

A program to be provided to the hard disk drive 2040 via the RAM 2020 is stored in a storage medium such as the flexible disk 2090, the CD-ROM 2095 or an IC card, and then is provided to the hard disk drive 2040 by a user. The program is read from the storage medium, is installed onto the hard disk drive 2040 in the computer 1900, and then is executed by the CPU 2000.

Programs installed on the computer 1900 and causing the computer 1900 to function as the storage device 20 include a storage module, an integrity information storage module, a table storage module, a hash engine module and a controller module. These programs or modules work on the CPU 2000 and the like to cause the computer 1900 to function as all of the storage unit 30, the integrity information storage unit 32, the table storage unit 34, the hash engine 36, and the controller 40.

Information processing written in these programs are read by the computer 1900 to function as the storage unit 30, the integrity information storage unit 32, the table storage unit 34, the hash engine 36 and the controller 40 which are specific means implemented by a collaborative combination of software and various kinds of hardware resources. Thus, these specific means perform information operation and processing of the computer 1900 according to an intended usage for the computer 1900 of this embodiment, thereby building up the storage unit 30, the integrity information storage unit 32, the table storage unit 34, the hash engine 36 and the controller 40 specific to the intended usage.

For example, when the computer 1900 communicates with an external apparatus or the like, the CPU 2000 executes a communication program loaded onto the RAM 2020, and instructs the communication interface 2030 to perform communication processing according to processing contents written in the communication program. In response to the control of the CPU 2000, the communication interface 2030 reads out transmit data stored in the transmit buffer area or the like provided on a storage device such as the RAM 2020, the hard disk drive 2040, the flexible disk 2090 or the CD-ROM 2095, and transmits the read-out transmit data to a network, or writes receive rata received from the network onto a receive buffer area or the like provided on the storage device. In this way, the communication interface 2030 may exchange transmit data and receive data with the storage device in a direct memory access (DMA) method. Alternatively, the CPU 2000 may transfer transmit data and receive data by reading data from the storage device or the communication interface 2030 which is to transmit the data, or writes data onto the communication interface 2030 or the storage device which is to receive the data.

In addition, the CPU 2000 loads data from an external device into the RAM 2020 through DMA transfer or the like, and executes various kinds of processing on the data on the RAM 2020. Here, the data thus loaded is a whole of or only a necessary part of a file, database or the like stored in the external storage device such as the hard disk drive 2040, the CD-ROM drive 2060 (the CD-ROM 2095) and the flexible disk drive 2050 (the flexible disk 2090). Thereafter, the CPU 2000 writes back the processed data onto the external device by the DMA transfer. Since the RAM 2020 is usable as one for temporarily storing the contents in the external storage device in the above processing, the RAM 2020, the external storage device and the like are collectively called a generic name such as a memory, a storage unit and/or a storage device in this embodiment. Various kinds of information of various programs, data, tables, databases and the like in this embodiment are to be stored on such a storage device and to be subjected to information processing. Alternatively, the CPU 2000 may cause a cash memory to hold a part of data on the RAM 2020, and perform reading and writing on the cash memory. Even in this mode of implementation, the cash memory takes a partial role in the function of the RAM 2020. Accordingly, such cash memory is also referred to as the generic name for the RAM 2020, the memory and/or the storage device except as descried distinguishably.

Moreover, the CPU 2000 performs various kinds of processing on data read from the RAM 2020 according to a sequence of instructions in the program, and writes back the processed data onto the RAM 2020. Here, the various kinds of processing include various computations, information processing, condition determinations, information search and replacement, and the like described in this embodiment. For example, in the condition determination, the CPU 2000 compares each of variables shown in this embodiment with its corresponding reference variable or constant to determine if the target variable satisfies one of the following conditions: the variable exceeds or falls below the reference variable or constant; the variable is not larger or smaller than the reference variable or constant; and the variable is equal to the reference variable or constant, and any other similar condition. Then, when the condition is satisfied (or is not satisfied), for example, the CPU 2000 jumps to another sequence of instructions, or invokes a sub-routine.

The CPU 2000 is able to search information stored in files, a database or the like in the storage device. For example, when the storage device stores multiple entries in each of which an attribute value of a first attribute is associated with an attribute value of a second, the CPU 2000 can obtain the attribute value of the second attribute associated with the first attribute that satisfies a predetermined condition, by firstly searching the multiple entries stored in the storage device to find an entry having the attribute value of the first attribute matching the predetermined condition, and then by reading he attribute value of the second attribute stored in the found entry.

Moreover, it should be noted that operations, procedures, steps and stages in all the kinds of processing in the apparatus, system, program, and method shown in this description can be executed in any execution order unless there is a distinctive expression such as "prior to" or "before," especially, or unless output of preceding processing is used in subsequent processing. Even through the description has been provided for the operation flows by use of words such as "first" and "then" for convenience, these words do not indicate that these operations must be executed in the described order definitely.

The programs and modules described above may be stored in an external storage medium. In addition to the flexible disk 2090 and the CD-ROM 2095, any one of the following media may be used as the storage medium: an optical storing medium such as a DVD and a CD; a magnetooptic storing medium such as an MD; a tape medium; and a semiconductor memory such as an IC card. Alternatively, the programs may be provided to the computer 1900 via a network, by using, as a storage medium, a storage device such as a hard disk and a RAM, provided in a server system connected to a private communication network or to the internet.

Hereinabove, the present invention has been described by use of the embodiment. However, the technical scope of the present invention is not limited to the extent described in the aforementioned embodiment. It is obvious to those skilled in the art that various modifications and improvements can be additionally provided to the above embodiment. From the description of the scope of claims, it is apparent that the technical scope of the present invention should include embodiments with such modifications or improvements.

## Claims

1. A storage device comprising:
a storage unit readable and writable from outside of the storage device;
an integrity information storage unit that stores integrity information used to verify whether data stored in the storage unit is tampered or not, and that is write-protected from the outside of the storage device;
a writing unit that receives a write command and a to-be-written data from the outside of the storage device, and writes the to-be-written data onto the storage unit;
a calculation unit that calculates the integrity information of the to-be-written data and writes the calculated integrity information onto the integrity information storage unit; and
a protection unit that inhibits overwriting on the to-be-written data thus written in the storage unit.

2. The storage device according to claim 1, wherein
the calculation unit calculates, as the integrity information, a hash value of the to-be-written data.

3. The storage device according to claim 1, wherein
on condition that the writing unit successfully completes writing of the to-be-written data onto the storage unit, the protection unit inhibits overwriting on the to-be-written data thus written in the storage unit.

4. The storage device according to claim 1, wherein
on condition that the writing unit fails to write the to-be-written data onto the storage unit, the protection unit allows writing from the outside of the storage device onto an area where the to-be-written data should have been written in the storage unit.

5. The storage device according to claim 1, further comprising a table storage unit that stores a management table for storing write failure information indicating whether or not the to-be-written data fails to be written, wherein
on condition that the to-be-written data fails to be written onto the storage unit, the writing unit overwrites the write failure information with a value indicating that the to-be-written data fails to be written.

6. The storage device according to claim 1, wherein
the protection unit receives, from the outside of the storage device, a setup command including information specifying a protected area to which the to-be-written data is to be stored in the storage unit, and allows writing on the protected area in the storage unit,
in response to a receipt of the write command and the to-be-written data, the writing unit writes the to-be-written data onto the protected area in the storage unit, and
on condition that the writing unit successfully completes the writing of the to-be-written data onto the storage unit, the protection unit inhibits writing onto the protected area.

7. The storage device according to claim 1, further comprising a comparing unit that receives an expected value of the integrity information of the to-be-written data together with the write command and the to-be-written data, and makes a comparison to determine whether the expected value matches the integrity information calculated by the calculation unit.

8. The storage device according to claim 1, further comprising a comparing unit,
wherein
upon receipt of a verification command from the outside of the storage device in a state where overwriting onto the to-be-written data written on the storage unit is inhibited, the calculation unit newly calculates the integrity information of the to-be-written data stored in the storage unit,
the comparing unit makes a comparison to determine whether or not the integrity information stored in the integrity information storage unit matches the integrity information newly calculated upon receipt of the verification command.

9. The storage device according to claim 8, wherein
on condition that the comparing unit obtains a comparison result indicating the mismatch, the protection unit allows overwriting onto the to-be-written data in the storage unit.

10. The storage device according to claim 8, wherein
on condition that the comparing unit obtains a comparison result indicating the mismatch, the comparing unit writes, onto the integrity information storage unit, the integrity information newly calculated upon receipt of the verification command.

11. A storage device comprising:
a storage unit readable and writable from outside of the storage device;
an integrity information storage unit that stores integrity information used to verify whether data stored in the storage unit is tampered or not, and that is write-protected from the outside of the storage device;
a writing unit that receives a write command and a to-be-written data from the outside of the storage device, and writes the to-be-written data onto the storage unit;
a calculation unit that calculates the integrity information of the to-be-written data, and writes the calculated integrity information onto the integrity information storage unit;
a protection unit that inhibits overwriting on the to-be-written data thus written in the storage unit;
a table storage unit that stores a management table for storing information specifying a protected area to which the to-be-written data is to be stored in the storage unit; and
a state management unit that manages the protected area so that the protected area can be in any of a normal operation state in which writing from the outside of the storage device is allowed, a protected state in which writing from the outside of the storage device is inhibited, and a writing state in which writing of the to-be-written data is in progress, wherein
the state management unit causes the protected area to transition into the writing state, upon receipt of the write command in any of the normal operation state and the protected state, and
the state management unit causes the protected area to transition into the protected state when the writing unit successfully completes writing of the to-be-written data onto the storage unit in the writing state.

12. An information processing apparatus comprising:
a CPU;
a security module that stores integrity information used to verify whether a program in execution in the information processing apparatus is tampered or not, and that is write-protected from outside of the information processing apparatus; and
a storage device, wherein
the storage device includes:
a storage unit readable and writable from outside of the storage device;
an integrity information storage unit that stores the integrity information of data in the storage unit, and that is write-protected from the outside of the storage device;
a writing unit that receives a write command and a to-be-written data from the outside of the storage device, and writes the to-be-written data onto the storage unit;
a calculation unit that calculates the integrity information of the to-be-written data, and writes the calculated integrity information onto the integrity information storage unit; and
a protection unit that inhibits overwriting on the to-be-written data thus written in the storage unit, and
prior to execution of the to-be-written program, the CPU reads the integrity information of the to-be-written program from the integrity information storage unit in the storage device, and gives the read integrity information to the security module.

13. A program executed by an information processing apparatus, and causing the information processing apparatus to function as a storage device, the program causing the information processing apparatus to function as:
a storage unit readable and writable from outside of the information processing apparatus;
an integrity information storage unit that stores integrity information used to verify whether data stored in the storage unit is tampered or not, and that is write-protected from the outside of the information processing apparatus;
a writing unit that receives a write command and a to-be-written data from the outside of the information processing apparatus, and writes the to-be-written data onto the storage unit;
a calculation unit that calculates the integrity information of the to-be-written data, and writes the calculated integrity information onto the integrity information storage unit; and
a protection unit that inhibits overwriting on the to-be-written data thus written in the storage unit.
